# EUROPÄISCHE PATENTSCHRIFT

(11) **EP 2 964 497 B1**
(45) Veröffentlichungstag und Bekanntmachung des Hinweises auf die Patenterteilung: **02.06.2021**
(21) Anmeldenummer: 14707395.1
(22) Anmeldetag: 28.02.2014
(51) Int. Cl.: B60T 11/224, B60T 13/66

(54) **DRUCKBEREITSTELLUNGSEINRICHTUNG UND BREMSANLAGE**
PRESSURE PROVISION DEVICE AND BRAKE SYSTEM
DISPOSITIF DE FOURNITURE DE PRESSION ET SYSTÈME DE FREINAGE

(30) Priorität: 05.03.2013 DE 102013203733; 20.08.2013 DE 102013216423
(43) Veröffentlichungstag der Anmeldung: 13.01.2016
(73) Patentinhaber: Continental Teves AG & Co. OHG, 60488 Frankfurt am Main (DE)
(72) Erfinder: FEIGEL, Hans-Jörg, 61191 Rosbach (DE); DROTT, Peter, 65936 Frankfurt/Main (DE); TARANDEK, Kristijan, 63263 Neu-Isenburg (DE); JUNGBECKER, Johann, 55576 Badenheim (DE)
(74) Vertreter: Continental Corporation
(86) Internationale Anmeldenummer: PCT/EP2014/053965
(87) Internationale Veröffentlichungsnummer: WO 2014/135454

(56) Entgegenhaltungen:
- DE-A1- 3 816 110
- DE-A1- 4 401 524
- DE-A1- 10 255 198
- GB-A- 2 172 353

## Beschreibung

Die Erfindung betrifft eine Druckbereitstellungseinrichtung gemäß dem Oberbegriff von Anspruch 1 und eine Bremsanlage gemäß dem Oberbegriff von Anspruch 10.

In der Kraftfahrzeugtechnik finden "Brake-by-wire"-Bremsanlagen eine immer größere Verbreitung. Solche Bremsanlagen umfassen oftmals neben einem durch den Fahrzeugführer betätigbaren Hauptbremszylinder eine elektrisch steuerbare Druckbereitstellungseinrichtung, mittels welcher in der Betriebsart "Brake-by-wire" eine Betätigung der Radbremsen stattfindet.

DE 44 01 524 A1 offenbart eine elektrisch steuerbare Druckbereitstellungseinrichtung mit einer in einem Gehäuse angeordneten Stufenbohrung und einem Stufenkolben, wobei die Kolbenstufe kleineren Durchmessers stets in der Stufe kleineren Durchmessers der Stufenbohrung angeordnet ist.

Aus der internationalen Patentanmeldung WO 2011/029812 A1 ist eine "Brake-by-wire"-Bremsanlage mit einem bremspedalbetätigbaren Hauptbremszylinder, einem Wegsimulator und einer Druckbereitstellungseinrichtung bekannt. Die Radbremsen werden in einer "Brake-by-wire"-Betriebsart durch die Druckbereitstellungseinrichtung mit Druck beaufschlagt. In einer Rückfallbetriebsart werden die Radbremsen mittels des Bremspedal betätigbaren Hauptbremszylinders mit Druck beaufschlagt.

Es ist eine Aufgabe der Erfindung, eine elektrisch steuerbare Druckbereitstellungseinrichtung, welche für eine hydraulische Kraftfahrzeug-Bremsanlage geeignet ist, bereitzustellen, die hinsichtlich der Baugröße und der Herstellungskosten verbessert ist. Dabei soll die Druckbereitstellungseinrichtung gegenüber Leckagen möglichst ausfallsicher sein, um so auch die Sicherheitsanforderungen für ein Kraftfahrzeug für autonomes Fahren zu erfüllen.

Diese Aufgabe wird erfindungsgemäß durch eine Druckbereitstellungseinrichtung gemäß Anspruch 1 und eine Bremsanlage gemäß Anspruch 10 gelöst.

Der Erfindung liegt der Gedanke zugrunde, dass in einer Stufenbohrung ein Stufenkolben geführt wird, dessen Kolbenstufe kleineren Durchmessers nach einer vorgegebenen Betätigung des Stufenkolbens in die Stufe kleineren Durchmessers der Stufenbohrung eintaucht, so dass der Druckraum der eine Druckbereitstellungseinrichtung in eine erste Druckkammer und eine zweite Druckkammer unterteilt wird.

Die erfindungsgemäße Druckbereitstellungseinrichtung umfasst eine in einem Gehäuse angeordnete Stufenbohrung, d.h. eine Gehäusebohrung mit einem ersten Bohrungsbereich mit einem ersten Bohrungsdurchmesser und einem zweiten Bohrungsbereich mit einem zweiten Bohrungsdurchmesser, wobei der erste Bohrungsdurchmesser kleiner als der zweite Bohrungsdurchmesser ist, und einen Stufenkolben, d.h. einen Kolben mit einem ersten Kolbenbereich mit einem ersten Kolbendurchmesser und einem zweiten Kolbenbereich mit einem zweiten Kolbendurchmesser, wobei der erste Kolbendurchmesser kleiner als der zweite Kolbendurchmesser ist.

Die Druckbereitstellungseinrichtung stellt eine Zylinder-Kolben-Anordnung dar, deren Kolben durch einen elektromechanischen Aktuator betätigbar ist.

Der elektromechanische Aktuator zur Betätigung des Stufenkolbens umfasst bevorzugt einen elektrischen Motor und ein Rotations-Translationsgetriebe.

Um eine verbesserte Ausfallsicherheit der Druckbereitstellungseinrichtung zu erreichen, ist bevorzugt ein Dichtelement vorgesehen, welches in einem eingetauchten Zustand der Kolbenstufe kleineren Durchmessers die erste Druckkammer und die zweite Druckkammer gegeneinander abdichtet. Das Dichtelement ist besonders bevorzugt zwischen der Kolbenstufe kleineren Durchmessers und dem Gehäuse im Bereich der Bohrungsstufe kleineren Durchmessers angeordnet.

Gemäß einer bevorzugten Ausführungsform ist das Dichtelement im Gehäuse im Bereich der Bohrungsstufe kleineren Durchmessers befestigt, da hier der dafür notwendige Bauraum leichter bereitzustellen ist.

Gemäß einer anderen bevorzugten Ausführungsform ist das Dichtelement an dem Stufenkolben im Bereich der Kolbenstufe kleineren Durchmessers befestigt, was den Vorteil einer einfacheren Montage auf dem Kolben bietet. Um eine Unterteilung des Druckraums in zwei Kammern möglichst frühzeitig zu erreichen, ist das Dichtelement besonders bevorzugt an dem der Kolbenstufe größeren Durchmessers abgewandten Ende der Kolbenstufe kleineren Durchmessers befestigt.

Bevorzugt ist der Druckmittelanschluss der Druckbereitstellungseinrichtung zur Verbindung mit den Radbremsen im Bereich der ersten Druckkammer angeordnet.

Gemäß einer Weiterbildung der Erfindung ist die zweite Druckkammer bevorzugt über ein Hydraulikventil mit einem Druckmittelbehälter verbindbar, um den Druck in der zweiten Druckkammer begrenzen oder reduzieren zu können.

Gemäß einer besonders kostengünstigen Ausführungsform ist das Hydraulikventil als ein Druckbegrenzungsventil ausgeführt.

Gemäß einer anderen bevorzugten Ausführungsform der erfindungsgemäßen Druckbereitstellungseinrichtung ist das Hydraulikventil als ein elektrisch betätigbares Hydraulikventil ausgeführt, welches in Abhängigkeit von einer Position des Stufenkolbens und/oder eines Druckes in der Druckbereitstellungseinrichtung angesteuert wird. Um im Falle eines Ausfalls der Ansteuerung des Hydraulikventils einen Druckaufbau im Druckraum durchführen zu können, ist das Hydraulikventil besonders bevorzugt stromlos geschlossen ausgeführt.

Es ist alternativ bevorzugt, dass das Hydraulikventil als ein mechanisch betätigbares Hydraulikventil ausgeführt ist, welches in Abhängigkeit von einer Position des Stufenkolbens angesteuert wird.

Die Erfindung betrifft auch eine Bremsanlage gemäß Anspruch 10 mit einer erfindungsgemäßen Druckbereitstellungseinrichtung.

Bevorzugt handelt es sich um eine Bremsanlage für Kraftfahrzeuge, die in einer sog. "Brake-by-wire"-Betriebsart sowohl vom Fahrzeugführer als auch unabhängig vom Fahrzeugführer ansteuerbar ist, vorzugsweise in der "Brake-by-wire"-Betriebsart betrieben wird und in mindestens einer Rückfallbetriebsart betrieben werden kann, in der nur der Betrieb durch den Fahrzeugführer möglich ist.

Die Bremsanlage umfasst bevorzugt eine Simulationseinrichtung, welche dem Fahrzeugführer in einer "Brake-by-wire"-Betriebsart ein angenehmes Bremspedalgefühl vermittelt. Die Simulationseinrichtung ist besonders bevorzugt hydraulisch ausgeführt und mit dem Hauptbremszylinder wirkungsmäßig gekoppelt. Die Simulationseinrichtung ist vorteilhafterweise mittels eines Simulator-Freigabeventils an- und abschaltbar ausgeführt.

Weitere bevorzugte Ausführungsformen der Erfindung ergeben sich aus den Unteransprüchen und der nachfolgenden Beschreibung anhand von Figuren.

Es zeigen schematisch
- Fig. 1: eine beispielsgemäße Druckbereitstellungseinrichtung, und
- Fig. 2: eine beispielsgemäße Bremsanlage.

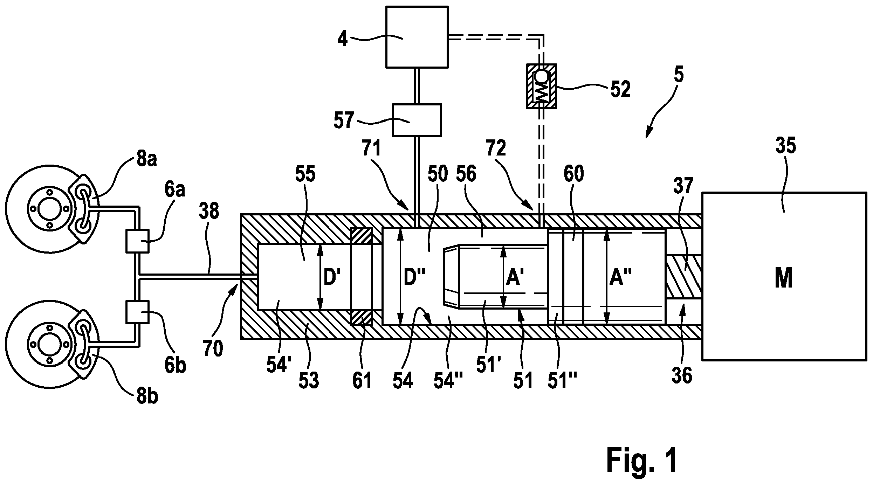

In Fig. 1 ist eine beispielsgemäße Druckbereitstellungseinrichtung 5 für ein fremdansteuerbares Bremssystem schematisch dargestellt. Die Druckbereitstellungseinrichtung 5 ist als eine hydraulische Zylinder-Kolben-Anordnung ausgebildet. Dazu ist in einem Gehäuse 53 eine Stufenbohrung 54 angeordnet, welche einen ersten Bohrungsbereich 54` mit einem ersten Bohrungsdurchmesser D' und einen zweiten Bohrungsbereich 54" mit einem zweiten Bohrungsdurchmesser D" umfasst, wobei der erste Bohrungsdurchmesser D' kleiner als der zweite Bohrungsdurchmesser D" ist. In der Stufenbohrung 54 ist ein Kolben 51 verschiebbar gelagert. Kolben 51 begrenzt zusammen mit der (gestuften) Gehäusebohrung 54 einen Druckraum 50. Kolben 51 ist durch einen elektromechanischen Aktuator betätigbar, der beispielsgemäß durch einen schematisch angedeuteten Elektromotor 35 und ein ebenfalls schematisch dargestelltes Rotations-Translationsgetriebe 36 gebildet wird. Das Rotations-Translationsgetriebe 36 wird z.B. durch einen Kugelgewindetrieb (KGT) gebildet, von welchem in Fig. 1 die Spindel 37 dargestellt ist.

Kolben 51 ist also durch den Elektromotor 35 unter Zwischenschaltung des Rotations-Translationsgetriebes 36 betätigbar. Durch ein Verschieben des Kolbens 51 in Betätigungsrichtung (nach links in Fig. 1) kann Druckmittel aus dem Druckraum 50 zu den Radbremsen einer hydraulischen Kraftfahrzeug-Bremsanlage verdrängt werden. In Fig. 1 sind beispielsgemäß zwei Radbremsen 8a, 8b über eine hydraulische Verbindung 38 an einen ersten Anschluss 70 des Druckraums 50 angeschlossen, wobei jeder Radbremse beispielhaft ein Einlassventil 6a, 6b zugeordnet ist. Druckraum 50 wird mittels eines ersten Dichtelements (Hauptdichtung) 60 gegenüber Atmosphärendruck gedichtet.

Kolben 51 ist als ein Stufenkolben ausgebildet, d.h. er umfasst einen ersten Kolbenbereich 51' mit einem ersten Kolbendurchmesser A' und einem zweiten Kolbenbereich 51" mit einem zweiten Kolbendurchmesser A", wobei der erste Kolbendurchmesser A' kleiner als der zweite Kolbendurchmesser A" ist. Anders ausgedrückt, weist der Kolben 51 einen Zapfen 51' mit geringerem Durchmesser auf. Bohrung 54 und Kolben 51 sind derart ausgeführt, dass bei einer Betätigung des gestuften Kolbens 51 in Betätigungsrichtung die Kolbenstufe 51' kleineren Durchmessers (der Zapfen) nach einer vorgegebenen Betätigung bzw. nach einem vorgegebenen Betätigungsweg in die Stufe 54' kleineren Durchmessers der Stufenbohrung 54 eintaucht. Hierdurch wird der Druckraum 50 in eine erste Druckkammer 55 und eine zweite Druckkammer 56 unterteilt, wobei die zweite Druckkammer 56 eine Ringkammer ist.

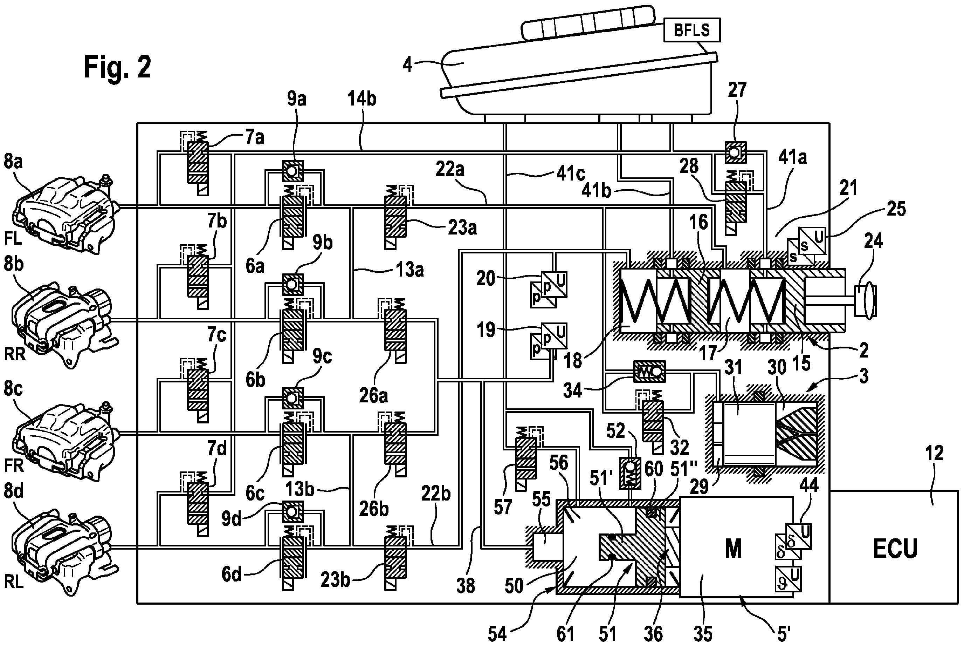

Zur Abdichtung der beiden Druckkammern 55, 56 gegeneinander ist ein zweites Dichtelement 61 vorgesehen, welches im eingetauchten Zustand der Kolbenstufe 51' zwischen der Kolbenstufe kleineren Durchmessers 51' und dem Gehäuse 53 im Bereich der Bohrungsstufe kleineren Durchmessers 54' angeordnet ist. Dabei kann das Dichtelement 61 im Gehäuse 53 im Bereich der Bohrungsstufe kleineren Durchmessers 54' befestigt sein (Anordnung des zweiten Dichtelements 61 in der kleinen Bohrung 54'), wie dies beispielsgemäß in Fig. 1 dargestellt ist. Der Zapfen 51' (die Kolbenstufe kleineren Durchmessers) taucht dann in das Dichtelement 61 ein. Alternativ kann das Dichtelement 61" an dem Stufenkolben 51 im Bereich der Kolbenstufe kleineren Durchmessers 51', vorteilhafterweise an dem der Kolbenstufe größeren Durchmessers 51" abgewandten Ende der Kolbenstufe kleineren Durchmessers 51", befestigt sein (Anordnung des zweiten Dichtelements 61' auf dem Zapfen / der Kolbenstufe 51"), wie dies in Fig. 2 beispielsgemäß dargestellt ist. Die Kolbenstufe 51" mit Dichtelement 61' taucht dann in die kleinere Bohrung 54' ein.

Der erste Anschluss 70 des Druckraums 50 zum Anschließen der Radbremsen 8a, 8b ist im Bereich der ersten Druckkammer 55 angeordnet. Hierdurch und durch die zweistufige Ausführung der Druckbereitstellungseinrichtung 5 kann die Verfügbarkeit eines elektrisch gesteuerten Druckaufbaus an den Radbremsen 8a, 8b mittels der Druckbereitstellungseinrichtung erhöht werden. Unter zweistufiger Ausführung der Druckbereitstellungseinrichtung wird die gestufte Ausführung der Gehäusebohrung 54 und des Kolbens 51 verstanden, durch welche der Druckraum 50 in zwei gegeneinander abgedichtete Druckkammern 55, 56 getrennt werden kann. Bei einem Ausfall der Hauptdichtung 60, wenn kein Druckaufbau im (Gesamt)Druckraum 50 mehr möglich ist, kann der Kolben 51 soweit vorgefahren werden, bis das zweite Dichtelement 61 in Eingriff kommt. Druckkammer 55 wird dann durch Dichtelement 61 gegen Atmosphärendruck gedichtet, so dass in Druckkammer 55 und damit in den Radbremsen 8a, 8b ein Druckaufbau weiterhin möglich ist. Ein schlafender Fehler des Dichtelements 61 kann durch Prüfroutinen detektiert werden. So kann beispielsweise in bestimmten Zeitabständen, bevorzugt in der Startphase, oder in anderen Betriebszuständen, in welchen das Fahrzeug steht, das Hydraulikventil geöffnet, der Kolben bis über das Eintauchen in das zweite Dichtelement vorgefahren werden, die Verbindungsventile zu den Radbremsen geschlossen gehalten werden und der entstehende Druck mittels eines Drucksensors als Hinweis auf eine intakte Dichtwirkung des zweiten Dichtelementes gewertet werden.

Im Bereich der zweiten Druckkammer 56 ist beispielsgemäß ein zweiter Anschluss 71 zum Druckraum 50 vorgesehen. Mittels Anschluss 71 ist Druckkammer 56 über ein Hydraulikventil 57 mit einem Druckmittelbehälter 4, vorteilhafterweise dem unter Atmosphärendruck stehenden Druckmittelvorratsbehälter 4 der Bremsanlage, verbindbar. Mittels des Hydraulikventils kann bewirkt werden, dass in der Druckkammer 56 kein weiterer Druckanstieg oder nur ein geringerer Druckanstieg oder ein Druckabsenken durchgeführt werden kann, auch wenn der Kolben 51 weiter betätigt wird (weiterer Druckaufbau in Druckkammer 55) . Durch die Begrenzung des Drucks in Druckkammer 56 bzw. ein Drucklosschalten der Druckkammer 56 kann die Förderleistung der Druckbereitstellungseinrichtung 5 zu den Radbremsen (über Kammer 55) verbessert werden und ein schnellerer Bremsdruckaufbau erreicht werden, ohne dass die aufzuwendende Motorleistung (das Motormoment) erhöht werden muss.

Druckbereitstellungseinrichtung 5 ist hinsichtlich ihrer Förderleistung für Nominalbedingungen (kein Fading) verbessert, so dass ein schnellerer Bremsdruckaufbau erfolgen kann, ohne dass die zu installierende Motorleistung / Motormoment angehoben werden muss. Dennoch werden die für Belag-Fading erforderlichen Bremsdrücke durch die Druckbereitstellungseinrichtung erreicht. Weiterhin ist die gesamte Baulänge der Druckbereitstellungseinrichtung reduziert.

Im einfachsten Fall ist das Hydraulikventil 57 als ein Druckbegrenzungsventil ausgeführt, welches rückseitig mit dem Druckmittelbehälter 4 verbunden ist.

Das Hydraulikventil 57 kann auch ein elektrisch betätigbares, vorteilhafterweise stromlos geschlossenes, Hydraulikventil sein, welches abhängig von einer Position des Stufenkolbens 51 und/oder eines Druckes in der Druckbereitstellungseinrichtung 5 geöffnet oder geschlossen wird und damit die Verbindung zum Druckmittelbehälter 4 öffnet oder schließt.

Alternativ kann das Hydraulikventil 57 als ein mechanisch ansteuerbares oder betätigbares Hydraulikventil ausgeführt sein, welches in Abhängigkeit von einer Position des Stufenkolbens 51 angesteuert wird, und die Verbindung zum Druckmittelbehälter 4 öffnet oder schließt.

Optional ist Druckraum 50 über einen dritten Anschluss 72 und eine hydraulische Verbindung mit einem in Strömungsrichtung zur Druckbereitstellungseinrichtung 5 hin öffnenden Rückschlagventil 52 mit dem unter Atmosphärendruck stehenden Druckmittelvorratsbehälter 4 der Bremsanlage verbunden, so dass Druckmittel aus dem Druckmittelvorratsbehälter 4 in den Druckraum 50 nachgesaugt werden kann. Anschluss 72 ist beispielsgemäß im Bereich der zweiten Kammer 56 angeordnet und wird bereits bei einer geringen Betätigung des Kolbens 51 durch die Kolbenstufe 51" verschlossen.

Gemäß einem anderen, nicht dargestellten Ausführungsbeispiel ist parallel zum Hydraulikventil 57 ein in Richtung des Behälters 4 schließendes Rückschlagventil 52 zum Bremsflüssigkeitsbehälter 4 angeordnet, welches bei einer Rückwärtsbewegung des Kolbens 51 ermöglicht, dass Druckmittel aus dem Behälter 4 nachgesaugt wird.

Eine erfindungsgemäße Druckbereitstellungseinrichtung wird bevorzugt in einer Bremsanlage eingesetzt, welche zum autonomen Fahren eingesetzt werden soll.

In Fig. 2 ist eine beispielsgemäße Bremsanlage für Kraftfahrzeuge schematisch dargestellt. Die Bremsanlage umfasst im Wesentlichen einen mittels eines nicht dargestellten Betätigungs- bzw. Bremspedals betätigbaren Hauptbremszylinder 2, einen mit dem Hauptbremszylinder 2 zusammen wirkenden Wegsimulator bzw. Simulationseinrichtung 3, einen dem Hauptbremszylinder 2 zugeordneten, unter Atmosphärendruck stehenden Druckmittelvorratsbehälter 4, eine elektrisch steuerbare Druckbereitstellungseinrichtung 5', eine elektronische Steuerund Regeleinheit 12 und eine elektrisch steuerbare Druckmodulationseinrichtung.

Die Druckmodulationseinrichtung umfasst beispielsgemäß je Radbremse 8a-8d eines nicht dargestellten Kraftfahrzeuges ein Einlassventil 6a-6d und ein Auslassventil 7a-7d, die paarweise über Mittenanschlüsse hydraulisch zusammengeschaltet und an die Radbremsen 8a-8d angeschlossen sind. Die Eingangsanschlüsse der Einlassventile 6a-6d werden mittels Bremskreisversorgungsleitungen 13a, 13b mit Drücken versorgt, die in einer "Brake-by-Wire"-Betriebsart aus einem Bremssystemdruck abgeleitet werden, der in einer an einen Druckraum 50 der elektrisch steuerbaren Druckbereitstellungseinrichtung 5' angeschlossenen Systemdruckleitung 38 vorliegt. Den Einlassventilen 6a-6d ist jeweils ein zu den Bremskreisversorgungsleitungen 13a, 13b hin öffnendes Rückschlagventil 9a-9d parallel geschaltet. In einer Rückfallbetriebsart werden die Bremskreisversorgungsleitungen 13a, 13b über hydraulische Leitungen 22a, 22b mit den Drücken der Druckräume 17, 18 des Hauptbremszylinders 2 beaufschlagt. Die Ausgangsanschlüsse der Auslassventile 7a-7d sind über eine Rücklaufleitung 14b mit dem Druckmittelvorratsbehälter 4 verbunden.

Der Hauptbremszylinder 2 weist in einem Gehäuse 21 zwei hintereinander angeordnete Kolben 15, 16 auf, die Druckräume 17, 18 begrenzen, die zusammen mit den Kolben 15, 16 einen zweikreisigen Hauptbremszylinder bzw. einen Tandemhauptzylinder bilden. Die Druckräume 17, 18 stehen einerseits über in den Kolben 15, 16 ausgebildete radiale Bohrungen sowie entsprechende Druckausgleichsleitungen 41a, 41b mit dem Druckmittelvorratsbehälter 4 in Verbindung, wobei diese durch eine Relativbewegung der Kolben 17, 18 im Gehäuse 21 absperrbar sind, und andererseits mittels der hydraulischen Leitungen 22a, 22b mit den bereits genannten Bremskreisversorgungsleitungen 13a, 13b in Verbindung, über die die Einlassventile 6a-6d an den Hauptbremszylinder 2 angeschlossen ist. Dabei ist in der Druckausgleichsleitung 41a eine Parallelschaltung eines stromlos offenen (SO-) Diagnoseventils 28 mit einem zum Druckmittelvorratsbehälter 4 hin schließenden Rückschlagventil 27 enthalten. Die Druckräume 17, 18 nehmen nicht näher bezeichnete Rückstellfedern auf, die die Kolben 15, 16 bei unbetätigtem Hauptbremszylinder 2 in einer Ausgangslage positionieren. Eine Kolbenstange 24 koppelt die Schwenkbewegung des Bremspedals infolge einer Pedalbetätigung mit der Translationsbewegung des ersten (Hauptzylinder-)Kolbens 15, dessen Betätigungsweg von einem vorzugsweise redundant ausgeführten Wegsensor 25 erfasst wird. Dadurch ist das entsprechende Kolbenwegsignal ein Maß für den Bremspedalbetätigungswinkel. Es repräsentiert einen Bremswunsch eines Fahrzeugführers.

In den an die Druckräume 17, 18 angeschlossenen Leitungsabschnitten 22a, 22b ist je ein Trennventil 23a, 23b angeordnet, welches als je ein elektrisch betätigbares, vorzugsweise stromlos offenes (SO-) Ventil ausgebildet ist. Durch die Trennventile 23a, 23b kann die hydraulische Verbindung zwischen den Druckräumen 17, 18 und den Bremskreisversorgungsleitungen 13a, 13b abgesperrt werden. Ein an den Leitungsabschnitt 22b angeschlossener Drucksensor 20 erfasst den im Druckraum 18 durch ein Verschieben des zweiten Kolbens 16 aufgebauten Druck.

Gemäß dem Ausführungsbeispiel sind die Radbremsen 8a und 8b dem linken Vorderrad (FL) und dem rechten Hinterrad (RR) zugeordnet und sind mit dem ersten Bremskreis I (13a) verbunden. Die Radbremsen 8c und 8d sind dem rechten Vorderrad (FR) und dem linken Hinterrad (RL) zugeordnet und mit dem zweiten Bremskreis II (13b) verbunden.

Wegsimulator 3 ist hydraulisch an den Hauptbremszylinder 2 angekoppelt und umfasst im Wesentlichen eine Simulatorkammer 29, eine Simulatorfederkammer 30 sowie einen die beiden Kammern 29, 30 voneinander trennenden Simulatorkolben 31. Simulatorkolben 31 stützt sich durch ein in Simulatorfederkammer 30 angeordnetes elastisches Element am Gehäuse 21 ab. Die Simulatorkammer 29 ist mittels eines elektrisch betätigbaren Simulatorfreigabeventils 32 mit dem ersten Druckraum 17 des Tandemhauptbremszylinders 2 verbindbar. Bei Vorgabe einer Pedalkraft und aktiviertem Simulatorfreigabeventil 32 strömt Druckmittel vom Hauptbremszylinder-Druckraum 17 in die Simulatorkammer 29. Ein hydraulisch antiparallel zum Simulatorfreigabeventil 32 angeordnetes Rückschlagventil 34 ermöglicht unabhängig vom Schaltzustand des Simulatorfreigabeventils 32 ein weitgehend ungehindertes Zurückströmen des Druckmittels von der Simulatorkammer 29 zum Hauptbremszylinder-Druckraum 17.

Die elektrisch steuerbare Druckbereitstellungseinrichtung 5' ist als eine hydraulische Zylinder-Kolben-Anordnung ausgebildet, deren Kolben 51 von einem schematisch angedeuteten Elektromotor 35 unter Zwischenschaltung eines ebenfalls schematisch dargestellten Rotations-Translationsgetriebes 36 betätigbar ist. Druckbereitstellungseinrichtung 5' wird durch eine in dem Gehäuse 21 angeordnete Stufenbohrung 54, in welcher der gestuft ausgeführte Kolben 51 verschiebbar geführt wird, gebildet. Der gestufte Kolben 51 begrenzt mit dem Gehäuse 21 einen Druckraum 50, der über ein an der größeren Kolbenstufe 51" angeordnetes Dichtelement 60 gegen Atmosphärendruck gedichtet wird. Ein Nachsaugen von Druckmittel in den Druckraum 50 ist durch ein Zurückfahren des Kolbens 51 bei geschlossenen Zuschaltventilen 26a, 26b möglich, indem Druckmittel aus dem Druckmittelvorratsbehälter 4 über ein als in Strömungsrichtung zum Aktuator öffnendes Rückschlagventil ausgebildetes Nachsaugventil 52 in den Druckraum 50 strömen kann.

Bei ausreichender Betätigung des Kolbens 51 wird der Druckraum 50 in eine erste Druckkammer 55, in deren Bereich die Systemdruckleitung 38 zu den Radbremsen 8a-8d angeschlossen ist, und eine zweite Druckkammer 56 (Ringkammer) geteilt. Die Kammern 55, 56 sind dann über ein an der kleineren Kolbenstufe 51' angeordnetes Dichtelement 61' von einander hydraulisch getrennt. Im Bereich der Druckkammer 56 ist ein Anschluss vorgesehen, über welchen die Druckkammer 56 mit einem elektrisch betätigbaren, stromlos geschlossenen Ventil 57 verbunden ist, welches weiter über Leitung 41c mit dem Druckmittelvorratsbehälter 4 verbunden ist.

Ein Vorteil der zweistufigen Druckbereitstellungseinrichtung 5' ist es, dass bei einer Leckage im Bereich der Druckkammer 56 bzw. des Dichtelements 60 der Druckaufbau an den Radbremsen 8a-8d über die Kammer 55 durchgeführt werden kann.

Zur Erfassung einer für die Position/Lage des Kolbens 51 der Druckbereitstellungseinrichtung 5' charakteristischen Größe ist ein Sensor 44 vorhanden, welcher beispielsgemäß als ein der Erfassung der Rotorlage des Elektromotors 35 dienender Rotorlagensensor ausgeführt ist. Andere Sensoren sind ebenso denkbar, z.B. ein Wegsensor zur Erfassung der Position/Lage des Kolbens 51. Anhand der für die Position/Lage des Kolbens 51 charakteristischen Größe ist eine Bestimmung des von der Druckbereitstellungseinrichtung 5' abgegebenen oder aufgenommenen Druckmittelvolumens V möglich. Zum Erfassen des von der Druckbereitstellungseinrichtung 5' erzeugten Bremssystemdruckes ist ein vorzugsweise redundant ausgeführter Drucksensor 19 vorgesehen.

Die elektronische Steuer- und Regeleinheit (ECU) 12 dient z.B. zur Ansteuerung der Druckbereitstellungseinrichtung 5', der Trennventile 23a, 23b, der Zuschaltventile 26a, 26b, des Simulatorfreigabeventils 32, der Einlass- und Auslassventile 6a-6d, 7a-7d sowie des Diagnoseventils 28.

## Patentansprüche

1. Elektrisch steuerbare Druckbereitstellungseinrichtung (5, 5'), insbesondere für eine hydraulische Kraftfahrzeug-Bremsanlage, mit einer in einem Gehäuse (53, 21) angeordneten Stufenbohrung (54) und einem Kolben (51), der durch einen elektromechanischen Aktuator (35, 36) betätigbar ist, wobei der Kolben (51) mit dem Gehäuse (53, 21) einen Druckraum (50) begrenzt, wobei der Kolben (51) als Stufenkolben ausgeführt ist, **dadurch gekennzeichnet, dass** dessen Kolbenstufe kleineren Durchmessers (51') nach einer vorgegebenen Betätigung des Stufenkolbens in die Stufe kleineren Durchmessers (54') der Stufenbohrung eintaucht, so dass der Druckraum (50) in eine erste Druckkammer (55) und eine zweite Druckkammer (56), insbesondere eine Ringkammer, unterteilt wird.

2. Druckbereitstellungseinrichtung nach Anspruch 1, **dadurch gekennzeichnet, dass** die zweite Druckkammer (56) über ein Hydraulikventil (57) mit einem Druckmittelbehälter (4), insbesondere einem unter Atmosphärendruck stehenden Druckmittelvorratsbehälter, verbindbar ist.

3. Druckbereitstellungseinrichtung nach Anspruch 2, **dadurch gekennzeichnet, dass** das Hydraulikventil (57) ein Druckbegrenzungsventil ist.

4. Druckbereitstellungseinrichtung nach Anspruch 2, **dadurch gekennzeichnet, dass** das Hydraulikventil (57) ein elektrisch betätigbares, insbesondere stromlos geschlossenes, Hydraulikventil ist, welches in Abhängigkeit von einer Position des Stufenkolbens (51) und/oder eines Druckes in der Druckbereitstellungseinrichtung angesteuert wird.

5. Druckbereitstellungseinrichtung nach Anspruch 2, **dadurch gekennzeichnet, dass** das Hydraulikventil (57) ein mechanisch betätigbares Hydraulikventil ist, welches in Abhängigkeit von einer Position des Stufenkolbens (51) angesteuert wird.

6. Druckbereitstellungseinrichtung nach einem der Ansprüche 1 bis 5, **dadurch gekennzeichnet, dass** ein Dichtelement (61) vorgesehen ist, welches in einem eingetauchten Zustand der Kolbenstufe kleineren Durchmessers (51') die erste Druckkammer (55) und die zweite Druckkammer (56) gegeneinander abdichtet, und welches insbesondere zwischen der Kolbenstufe kleineren Durchmessers (51') und dem Gehäuse (53) im Bereich der Bohrungsstufe kleineren Durchmessers (54') angeordnet ist.

7. Druckbereitstellungseinrichtung nach Anspruch 6, **dadurch gekennzeichnet, dass** das Dichtelement (61) im Gehäuse (53) im Bereich der Bohrungsstufe kleineren Durchmessers (54') befestigt ist.

8. Druckbereitstellungseinrichtung nach Anspruch 6, **dadurch gekennzeichnet, dass** das Dichtelement (61') an dem Stufenkolben im Bereich der Kolbenstufe kleineren Durchmessers (51'), insbesondere an dem der Kolbenstufe größeren Durchmessers abgewandten Ende der Kolbenstufe kleineren Durchmessers, befestigt ist.

9. Druckbereitstellungseinrichtung nach einem der Ansprüche 1 bis 8, **dadurch gekennzeichnet, dass** der Druckraum (50) mit einem ersten Druckmittelanschluss (70) zur Verbindung mit hydraulisch betätigbaren Radbremsen (8a, 8b) versehen ist, wobei der erste Druckmittelanschluss im Bereich der ersten Druckkammer (55) angeordnet ist.

10. Bremsanlage für Kraftfahrzeuge mit einem mittels eines Bremspedals betätigbaren Hauptbremszylinder (2), dessen mindestens ein Druckraum (17) mit Radbremsen (8a-8d), insbesondere trennbar (23a, 23b), verbunden ist, einer Druckregelventilanordnung (6a-6d, 7a-7d) zur Regelung und/oder Steuerung eines an einer Radbremse eingesteuerten Radbremsdruckes, einer elektrisch steuerbaren Druckbereitstellungseinrichtung (5, 5'), welche mit den Radbremsen verbindbar ist, und einer elektronischen Steuerund Regeleinheit (12) zur Ansteuerung der Druckbereitstellungseinrichtung (5, 5') und/oder der Druckregelventilanordnung (6a-6d, 7a-7d), **dadurch gekennzeichnet, dass** diese eine Druckbereitstellungseinrichtung nach einem der Anspruch 1 bis 9 umfasst.

## Claims

1. Electrically controllable pressure provision device (5, 5'), in particular for a hydraulic motor vehicle brake system, having a stepped bore (54) which is arranged in a housing (53, 21) and a piston (51) which can be actuated by an electromechanical actuator (35, 36), the piston (51) delimiting a pressure space (50) with the housing (53, 21), the piston (51) being configured as a stepped piston, **characterized in that** the piston step of smaller diameter (51') of said stepped piston dips into the step of smaller diameter (54') of the stepped bore after a predefined actuation of the stepped piston, with the result that the pressure space (50) is divided into a first pressure chamber (55) and a second pressure chamber (56), in particular an annular chamber.

2. Pressure provision device according to Claim 1, **characterized in that** the second pressure chamber (56) can be connected via a hydraulic valve (57) to a pressure medium vessel (4), in particular a pressure medium reservoir under atmospheric pressure.

3. Pressure provision device according to Claim 2, **characterized in that** the hydraulic valve (57) is a pressure limiting valve.

4. Pressure provision device according to Claim 2, **characterized in that** the hydraulic valve (57) is an electrically actuable, in particular normally closed, hydraulic valve which is actuated depending on a position of the stepped piston (51) and/or a pressure in the pressure provision device.

5. Pressure provision device according to Claim 2, **characterized in that** the hydraulic valve (57) is a mechanically actuable hydraulic valve which is actuated depending on a position of the stepped piston (51).

6. Pressure provision device according to one of Claims 1 to 5, **characterized in that** a sealing element (61) is provided which, in a dipped state of the piston step of smaller diameter (51'), seals the first pressure chamber (55) and the second pressure chamber (56) with respect to one another, and which is arranged, in particular, between the piston step of smaller diameter (51') and the housing (53) in the region of the bore step of smaller diameter (54').

7. Pressure provision device according to Claim 6, **characterized in that** the sealing element (61) is fastened in the housing (53) in the region of the bore step of smaller diameter (54').

8. Pressure provision device according to Claim 6, **characterized in that** the sealing element (61') is fastened to the stepped piston in the region of the piston step of smaller diameter (51'), in particular to that end of the piston step of smaller diameter which faces away from the piston step of larger diameter.

9. Pressure provision device according to one of Claims 1 to 8, **characterized in that** the pressure space (50) is provided with a first pressure medium connector (70) for connecting to hydraulically actuable wheel brakes (8a, 8b), the first pressure medium connector being arranged in the region of the first pressure chamber (55).

10. Brake system for motor vehicles having a brake master cylinder (2) which can be actuated by means of a brake pedal and the at least one pressure space (17) of which is connected to wheel brakes (8a-8d), in particular in a manner which can be disconnected (23a, 23b), a pressure control valve arrangement (6a-6d, 7a-7d) for regulating and/or controlling a wheel brake pressure which is triggered at a wheel brake, an electrically controllable pressure provision device (5, 5') which can be connected to the wheel brakes, and an electronic control and regulating unit (12) for actuating the pressure provision device (5, 5') and/or the pressure control valve arrangement (6a-6d, 7a-7d), **characterized in that** it comprises a pressure provision device according to one of Claims 1 to 9.

## Revendications

1. Dispositif d'alimentation en pression à commande électrique (5, 5'), destiné en particulier à un système de freinage hydraulique de véhicule automobile, ledit dispositif comprenant un alésage étagé (54) ménagé dans un boîtier (53, 21) et un piston (51) qui peut être actionné par un actionneur électromécanique (35, 36), le piston (51) délimitant avec le boîtier (53, 21) une chambre de pression (50), le piston (51) étant conçu comme un piston étagé, **caractérisé en ce que** l'étage de plus petit diamètre (51') du piston pénètre dans l'étage de plus petit diamètre (54') de l'alésage étagé après un actionnement prédéterminé du piston étagé de façon à diviser la chambre de pression (50) en une première chambre de pression (55) et une deuxième chambre de pression (56), en particulier une chambre annulaire.

2. Dispositif d'alimentation en pression selon la revendication 1, **caractérisé en ce que** la deuxième chambre de pression (56) peut être reliée par le biais d'une soupape hydraulique (57) à un réservoir d'agent sous pression (4), notamment un réservoir de stockage d'agent sous pression qui est sous pression atmosphérique.

3. Dispositif d'alimentation en pression selon la revendication 2, **caractérisé en ce que** la soupape hydraulique (57) est une soupape de surpression.

4. Dispositif d'alimentation en pression selon la revendication 2, **caractérisé en ce que** la soupape hydraulique (57) est une soupape hydraulique actionnable électriquement, en particulier fermée hors tension, qui est commandée en fonction de la position du piston étagé (51) et/ou de la pression dans le dispositif d'alimentation en pression.

5. Dispositif d'alimentation en pression selon la revendication 2, **caractérisé en ce que** la soupape hydraulique (57) est une soupape hydraulique actionnable mécaniquement qui est commandée en fonction de la position du piston étagé (51).

6. Dispositif d'alimentation en pression selon l'une des revendications 1 à 5, **caractérisé en ce qu'**un élément d'étanchéité (61) est prévu qui réalise, lorsque l'étage de plus petit diamètre (51') du piston a pénétré, l'étanchéité de la première chambre de pression (55) et de la deuxième chambre de pression (56) l'une par rapport à l'autre, et qui est disposé en particulier entre l'étage de plus petit diamètre (51') du piston et le boîtier (53) dans la zone de l'étage de plus petit diamètre (54') de l'alésage.

7. Dispositif d'alimentation en pression selon la revendication 6, **caractérisé en ce que** l'élément d'étanchéité (61) est fixé dans le boîtier (53) dans la zone de l'étage de plus petit diamètre (54') de l'alésage.

8. Dispositif d'alimentation en pression selon la revendication 6, **caractérisé en ce que** l'élément d'étanchéité (61') est fixé au piston étagé dans la zone de l'étage de plus petit diamètre (51') du piston, en particulier à l'extrémité de l'étage de plus petit diamètre du piston qui est opposée à l'étage de plus grand diamètre du piston.

9. Dispositif d'alimentation en pression selon l'une des revendications 1 à 8, **caractérisé en ce que** la chambre de pression (50) est pourvue d'un premier raccord d'agent sous pression (70) destiné à être relié à des freins de roue (8a, 8b) actionnables hydrauliquement, le premier raccord d'agent sous pression étant disposé dans la zone de la première chambre de pression (55).

10. Système de freinage destiné à des véhicules automobiles, ledit système comprenant un cylindre de frein principal (2) qui est actionnable au moyen d'une pédale de frein et dont au moins une chambre de pression (17) est reliée à des freins de roue (8a-8d), notamment de manière séparable (23a, 23b), un ensemble de soupapes de régulation de pression (6a-6d, 7a-7d) destiné à réguler et/ou commander une pression de frein de roue appliquée à un frein de roue, un dispositif d'alimentation en pression à commande électrique (5, 5') qui peut être relié aux freins de roue, et une unité de commande et de régulation électronique (12) destinée à commander le dispositif d'alimentation en pression (5, 5') et/ou l'ensemble de soupapes de régulation de pression (6a-6d, 7a-7d), **caractérisé en ce que** ledit système comprend un dispositif d'alimentation en pression selon l'une des revendications 1 à 9.
